# EUROPÄISCHE PATENTSCHRIFT

(11) **EP 2 781 341 B1**
(45) Veröffentlichungstag und Bekanntmachung des Hinweises auf die Patenterteilung: **10.05.2017**
(21) Anmeldenummer: 13401027.1
(22) Anmeldetag: 20.03.2013
(51) Int. Cl.: B29C 65/10, B65D 35/12, B29L 23/20, B29L 9/00

(54) **Verfahren und Vorrichtung zur Herstellung von Laminattuben**
Method and device for producing laminate tubes
Procédé et dispositif destinés à la fabrication de tubes laminés

(43) Veröffentlichungstag der Anmeldung: 24.09.2014
(73) Patentinhaber: Pirlo GmbH & Co. KG, 6330 Kufstein (AT)
(72) Erfinder: Lüthi, Julius, 6330 Kufstein (AT)
(74) Vertreter: Mischung, Ralf

(56) Entgegenhaltungen:
- GB-A- 1 570 486
- JP-A- S5 260 872
- JP-A- H11 245 312
- JP-U- S5 270 647

## Beschreibung

Die vorliegende Erfindung betrifft ein Verfahren zur Herstellung von Laminattuben nach Anspruch 1 bzw. eine entsprechende Vorrichtung nach Anspruch 7.

Der Tubenkörper von Laminattuben besteht aus mehreren Materialschichten, deren Eigenschaften je nach Anwendungsfall vorgebbar sind, wodurch sich ein weites Einsatzfeld derartiger Tuben ergibt. Bei der Herstellung der Tuben wird ein in zylindrischer Form bereitgestelltes Tubenlaminat an einer Tubenschulter positioniert, um einen oberen Endabschnitt des Tubenlaminats mit der Schulter zu verschmelzen. Die Schulter bildet dann den oberen Abschluss der Tube und nimmt beispielsweise einen Schraubverschluss auf. Das Verschmelzen von Tubenlaminat und Schulter geschieht unter kurzzeitiger Beaufschlagung der miteinander zu verbindenden Abschnitte mit einem heißen Gas, insbesondere Luft, in einer nachfolgend als Erwärmungsvorrichtung bezeichneten Vorrichtung. Der Endabschnitt des Laminats und der für die Verbindung vorgesehene Schulterbereich der Tubenschulter werden dabei plastifiziert und können durch anschließendes Aufeinanderpressen miteinander verbunden werden.

Bekannt ist aus einem Stand der Technik ein Verfahren, bei dem das Tubenlaminat und die Tubenschulter für die später vorgesehene Verbindung mittels eines Dorns (dieser trägt das Tubenlaminat) und eines Spindelkopfes (welcher die Tubenschulter trägt) relativ zueinander positioniert werden, um anschließend die bereits beschriebene Erwärmung vorzunehmen. Um den erwärmten Endabschnitt mit dem ebenfalls erwärmten Schulterbereich zur Verschmelzung in Verbindung zu bringen, wird das Tubenlaminat gemeinsam mit der relativ dazu positionierten Tubenschulter aus der Erwärmungsvorrichtung herausgezogen und in eine Pressform geschoben, bei der der Endabschnitt sich an den erwärmten Schulterabschnitt anlegen und sich fest mit diesem verbinden soll.

Beim Einführen des Tubenlaminats samt Tubenschulter in die Pressform taucht im Stand der Technik häufig das Problem auf, dass der durch die Erwärmung aufgeweichte und nicht formstabile Endabschnitt des Tubenlaminats abschnittsweise radial nach außen kippt und seine zylinderförmige Struktur verliert. Gerade durch eine nach außen erfolgende Verformung ergibt sich das Problem, dass beim anschließenden Einführen des Tubenlaminats in die Pressform die nach außen umgelenkten Abschnitte nicht sauber in die Pressform eingeführt werden können, so dass die in der Pressform erzwungene Verformung nach innen in Richtung auf die Tubenschulter nicht vollständig und gleichmäßig erfolgt. Fehlproduktionen sind die Folge.

Aus der JP H11 245312 A und der JP S52 70647 U ist ein Verfahren zur Herstellung von Laminattuben bekannt. Dabei wird ein Abschnitt eines Tubenlaminats an einer Tubenschulter positioniert und erwärmt, wobei der erwärmte Abschnitt mit einer zur Tubenachse gerichteten Medienströmung beaufschlagt wird.

Die JP S52 60872 A zeigt ein ähnliches Verfahren, wobei hier eine erwärmte Form den oberen Abschnitt eines Tubenlaminats radial einwärts auf eine Tubenschulter verformt, um die beiden Teile miteinander zu verbinden.

Die GB 1 570 486 A beschreibt, wie mittels Heißluft Komponenten einer Vorrichtung erwärmt werden, die die aufgenommene Wärme an ein Tubenlaminat bzw. eine Tubenschulter abgeben, um anschließend Tubenschulter und Laminattube gegeneinander zu pressen und miteinander zu verschweißen.

Aufgabe der Erfindung war es daher, ein Verfahren und eine Vorrichtung zur verbesserten Herstellung von Laminattuben anzubieten, welche das genannte Problem lösen.

Die Erfindung löst die Aufgabe mit den Merkmalen des Anspruchs 1 bzw. 7.

Als erfindungswesentlich hat sich die überraschende Erkenntnis herausgestellt, dass eine Verformung des aufgeweichten oberen Endabschnitts des Tubenlaminats nach innen bzw. in Richtung auf die Tubenschulter dann besonders gut und gleichmäßig erreicht werden kann, wenn der Endabschnitt nach dem Erwärmen von außen mit einer zur Tubenachse gerichteten Medienströmung beaufschlagt wird, beispielsweise mit Druckluft. Versuche mit einer solchen Strömungsbeaufschlagung brachten sehr gute Ergebnisse beim anschließenden Einführen des Tubenlaminats samt Tubenschulter in die Pressform. Die Medienströmung bewirkte eine gleichmäßige Neigung des erwärmten Endabschnitts nach innen hin zur Tubenschulter derart, dass ein Ausweichen oder Umformen des Endabschnitts radial nach außen sicher vermieden werden konnte. Stattdessen konnte durch die Beaufschlagung mit der Strömung eine allseitig nach innen gerichtete Neigung des plastifizierten Endabschnitts erreicht werden, so dass der Endabschnitt ohne ungewollte Verformung vollständig in die Pressform gelangen konnte und eine saubere Verbindung mit der Tubenschulter herstellbar war.

Andere Versuche, den plastifizierten Endabschnitt durch gezielten Kontakt mit mechanischen Hilfsmitteln zur Tubenachse hin zu verformen, waren konstruktiv aufwendig und nicht erfolgreich. Die Beaufschlagung mit einer nach innen gerichteten Strömung dagegen brachte gute Ergebnisse und lässt sich mit relativ geringem konstruktivem Aufwand bewerkstelligen. Eine automatische Kopplung des Beaufschlagungszeitpunktes an eine Axialposition des Tubenlaminats vereinfacht und verbessert das Verfahren zusätzlich.

Bei dem erfindungsgemäßen Verfahren wird ein Tubenlaminat mit einer um eine Tubenachse Z ausgebildeten Tubenschulter verbunden, wobei die folgenden Verfahrensschritte aus dem Stand der Technik bekannt sind:
a) Positionieren eines Endabschnitts (3) des Tubenlaminats (1) an der Tubenschulter (2)
b) Erwärmen des Endabschnitts (3).

Bei dem erfindungsgemäßen Verfahren wird der erwärmte Endabschnitt mit einer zur Tubenachse Z gerichteten Medienströmung beaufschlagt, um den Endabschnitt in Richtung auf einen Verbindungsbereich der Tubenschulter umzuformen. Die von außen nach innen gerichtete Medienströmung bewirkt erfindungsgemäß das Verformen oder gar Anlegen des durch die Erwärmung plastifizierten Endabschnitts zur Tubenachse hin bzw. an die Tubenschulter. Dadurch wird sichergestellt, dass der Radius des Endabschnitts nach der Beaufschlagung jedenfalls nicht größer ist als vorher, vorzugsweise sogar geringer. Entsprechend erleichtert wird das auf die Erwärmung folgende Einführen des Endabschnitts in eine Pressform, mit der die plastifizierten Bereiche gegeneinander gedrückt bzw. miteinander verschmolzen werden.

Der Ausdruck *"zur Achse Z gerichtet"* bedeutet im Folgenden nicht, dass es sich ausschließlich um eine zur Tubenachse lotrechte Strömung handelt. Vielmehr ist vorgesehen, dass ein die Strömung repräsentierender Strömungsvektor bei Zerlegung in zwei zueinander senkrechte Komponenten eine lotrecht auf die Achse Z gerichtete Komponente enthält.

Des Weiteren bezeichnet der Ausdruck *"Endabschnitt"* den Bereich am Ende eines meist zylinderförmig bereitgestellten Tubenlaminats in der Größenordnung von einigen Millimetern, eventuell auch darunter. Der Endabschnitt muss sich nicht zwingend bis zum physikalischen Ende des Tubenlaminats erstrecken, sondern kann auch eine Zone kurz vor diesem physikalischen Ende bezeichnen. Der Endabschnitt ist derjenige Bereich am Ende des Tubenlaminats, der zur Verbindung mit der Tubenschulter erwärmt und erfindungsgemäß mit der Medienströmung beaufschlagt werden soll.

Um den Endabschnitt beim Erwärmen in radialer Richtung nach außen abzustützen, sieht eine Ausführungsform des Verfahrens vor, dass der Endabschnitt während der Erwärmung an seiner Außenseite mit einem Stützring abgestützt wird. Beispielsweise kann das Tubenlaminat auf einem zylinderförmigen Dorn aufgeschoben in einen solchen Stützring eingeführt bzw. relativ dazu bewegt werden. Der um ein Maß über die Tubenschulter hinausragende Endabschnitt des Tubenlaminats ist dann von innen für ein erwärmendes Gas frei zugänglich, wird aber von außen durch eine vorzugsweise zylinderförmige Innenwand des Stützrings abgestützt. Dadurch wird verhindert, dass sich der Endabschnitt während der Erwärmung aufweiten kann.

Nach einer weiteren vorteilhaften Ausführungsform der Erfindung ist vorgesehen, dass der Endabschnitt an einem den Endabschnitt umlaufenden Ringspalt vorbeibewegt wird, aus welchem das den Endabschnitt beaufschlagende Medium strömt. Zweckmäßigerweise umläuft der Ringspalt das Tubenlaminat vollständig, so dass eine Beaufschlagung über den gesamten Umfang möglich ist. Weiterhin zweckmäßigerweise ist der Ringspalt in axialer Richtung etwas beabstandet zu der Position vorgesehen, an der der Endabschnitt und die Tubenschulter erwärmt werden. Nach der erfolgten Erwärmung wird das Tubenlaminat gemeinsam mit der Tubenschulter in axialer Richtung aus der Erwärmungsvorrichtung herausgezogen, wobei das Tubenlaminat dann an dem gegenüber dem Tubenlaminat ortsfesten Ringspalt entlang gleitet. Sobald der plastifizierte Endabschnitt in den Wirkbereich des Ringspalts bzw. des daraus dann nach innen hervorströmenden Mediums gelangt, bewirkt die auf die Außenseite des Endabschnitts gerichtete Strömung eine Verformung des Endabschnitts nach innen hin in Richtung auf die Tubenachse bzw. an die Tubenschulter heran. Die Beaufschlagungsdauer kann im Bereich weniger Sekundenbruchteile, beispielsweise 0,3 s, liegen.

Die Beaufschlagung des Endabschnitts mit dem strömenden Medium kann mittels einer geeigneten Steuereinheit vorgenommen werden, welche die Beaufschlagung zu einem frei wählbaren Zeitpunkt auslöst. Dieser Zeitpunkt könnte vor Beginn oder während bereits erfolgender Erwärmung liegen. Eine besonders bevorzugte Ausführungsform des Verfahrens sieht die Beaufschlagung jedoch vor für einen Zeitpunkt nach erfolgter Erwärmung, da hier die Beaufschlagung nicht mit einer Strömung von erwärmendem Gas in Wechselwirkung tritt.

Die Beaufschlagung des Endabschnitts lässt sich auf einfache Weise koppeln an eine bestimmte axiale Position des Tubenlaminats. Das geschieht bspw., indem der ortsfest zur Erwärmungsvorrichtung vorgesehene Ringspalt durch das Tubenlaminat verschlossen wird, wenn dieses für die Plastifizierung seines Endabschnitts vollständig in die Erwärmungsvorrichtung eingeschoben ist. Wird das Tubenlaminat anschließend mit der Tubenschulter an dem Ringspalt entlang aus der Erwärmungsvorrichtung herausgezogen, so kann ein mit wählbarem Überdruck in dem Ringspalt anstehendes Strömungsmedium in dem Moment ausströmen, in dem nicht mehr das von dem Dorn nach innen stabilisierte Tubenlaminat, sondern der frei nach innen bewegliche Endabschnitt am oberen Ende des Tubenlaminats den Ringspalt passiert. Das Tubenlaminat bzw. der dieses Tubenlaminat bewegende Dorn samt Spindelkopf wirkt als Ventilkörper, der den Ringspalt freigibt, wenn der plastifizierte Endabschnitt den Ringspalt passiert. Eine separate Steuerung zur gezielten Auslösung der Strömungsbeaufschlagung ist in diesem Fall überflüssig, da die Beaufschlagung durch rein mechanische Mittel mit hoher Wiederholgenauigkeit ausgelöst wird.

Das das strömende Medium bereitstellende Element ist nach einer vorteilhaften Ausführungsform der Erfindung als Ringstruktur ausgebildet, die das Tubenlaminat umfangsseitig vollständig umläuft. Die Ringstruktur (auch als Luftring bezeichnet) kann dabei eine Kammer mit nach innen geöffneten Ausnehmungen aufweisen, durch welche das Medium gegen den Endabschnitt strömen kann. Eine vereinfachte Ausführungsform dagegen sieht vor, dass die Kammer als axial eingebrachte Ringnut ausgebildet ist, die erst nach Anlage an ein weiteres Bauteil der Vorrichtung, beispielsweise den genannten Stützring, geschlossen wird. Die Fertigung eines solchen Luftringes ist einfacher als die Ausbildung einer Kammer innerhalb eines einzigen Elements.

Erfindungsgemäß wird die Kammer mit Überdruck beaufschlagt, der sich bei Freigabe der nach innen gerichteten Öffnungen nahezu schlagartig durch Anströmen der Außenseite des Endabschnitts entspannt. Die Medienzufuhr in den Luftring kann an einer, zweckmäßigerweise aber auch an mehreren über den Umfang verteilten Öffnungen erfolgen, um die Strömungsverhältnisse im Luftring zu optimieren. Die zum Tubenlaminat hin gerichtete wenigstens eine Öffnung ist vorzugsweise als Ringspalt, in anderer Ausführung jedoch auch als Folge von über den Umfang verteilten einzelnen Öffnungen denkbar. Die Öffnungen können nach Anzahl, Umfangsverteilung und Positionierung in axialer Richtung frei gewählt werden, um ein optimales Anströmverhalten bzw. Anlageverhalten des Endabschnitts in Richtung auf die Tubenschulter zu erzielen.

Eine spezielle Ausführungsform des erfindungsgemäßen Verfahrens umfasst folgende Schritte:
a) Anordnen eines Tubenlaminats (1) auf einem Dorn (11);
b) Anordnen einer Tubenschulter (2) auf einem Spindelkopf (12);
c) Positionieren des Dorns (11) relativ zum Spindelkopf (12) derart, dass ein Endabschnitt (3) des Tubenlaminats (1) in axialer Richtung oberhalb eines Verbindungsbereichs (4) der Tubenschulter (2) angeordnet ist;
d) Erwärmen des Endabschnitts (3) und des Verbindungsbereichs (4) zum Zweck der späteren Verschmelzung mit einem heißen Gas (20);
e) Bewegen des Dorns (11) mit Spindelkopf (12) derart, dass der Endabschnitt (3) an einem das Tubenlaminat (1) umlaufenden Ringspalt (6) vorbeibewegt wird,
f) Beaufschlagung der Außenseite (3') des Endabschnitts (3) mit einem aus dem Ringspalt (6) strömenden Medium, insbesondere Druckluft.

Diese spezielle Ausführungsform des Verfahrens wird anhand des Figurenbeispiels näher erläutert. Bei der erfindungsgemäßen Vorrichtung zur Fertigung von Laminattuben nach einem der vorgenannten Verfahren sind geeignete Mittel zur Beaufschlagung des Endabschnitts des Tubenlaminats vorgesehen, so dass die Außenseite des Endabschnitts mit einer darauf gerichteten Strömung beaufschlagbar ist. Die Anordnung der Mittel ist zunächst frei wählbar, so lange die Beaufschlagung des Endabschnitts vor oder während, vorzugsweise aber nach der Erwärmung erfolgen kann. Entsprechend könnten die Mittel auch auf der Axialposition des Endabschnitts angeordnet sein, die dieser bei der Plastifizierung einnimmt. Alternativ ist die Anordnung der Mittel aber auch an einer anderen Axialposition denkbar, welche das Tubenlaminat mit plastifiziertem Endabschnitt und Tubenschulter nach der Erwärmung passiert. Im Moment der Passage kann die Beaufschlagung in Richtung der Tubenachse erfolgen, um das gewünschte Verformungsverhalten des Endabschnitts zu erzielen.

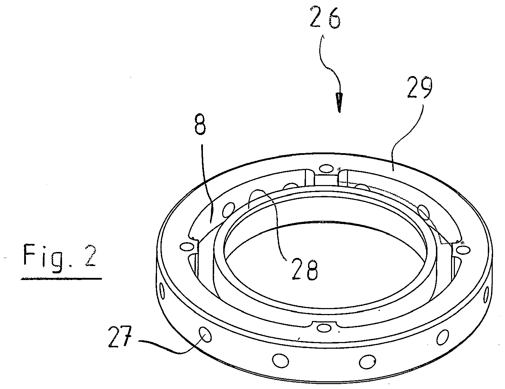

Als besonders zweckmäßig hat sich ein nach innen offener Ringspalt herausgestellt, durch den hindurch der Endabschnitt nach seiner Plastifizierung mit Druckluft beaufschlagbar ist. Wie im nachstehend beschriebenen Ausführungsbeispiel zu sehen sein wird, kann der Ringspalt gebildet werden durch Anlage eines Luftringes an einen Stützring. Die axialen Abmessungen des Luftrings an seinem äußeren Umfang sind etwas größer gewählt als in seinem Inneren, so dass die Differenz dieser Abmessungen den Ringspalt ausbildet. Einzelheiten zu einem geeigneten Luftring sind in Fig. 2 dargestellt.

Eine Ausführungsform der Erfindung sieht vor, dass eine mit Medium beaufschlagbare Kammer wenigstens eine Öffnung (vorzugsweise einen Ringspalt) aufweist, welche durch Bewegung des Tubenlaminats entlang dessen axialer Richtung verschließbar ist. Dabei bildet das Tubenlaminat eine Art Ventilkörper, der die Ausströmöffnung in Abhängigkeit seiner Axialposition verschließt oder freigibt. Um die Ausströmöffnung sicher zu verschließen, ist das Tubenlaminat innenseitig abgestützt, zweckmäßigerweise mittels eines Dorns. Im Bereich des Endabschnitts fehlt diese innere Abstützung, da dort die konisch nach innen zulaufende Tubenschulter an das Tubenlaminat angrenzt. Gelangt der Endabschnitt durch axiale Bewegung in den Ausströmbereich der Öffnung, gibt der Endabschnitt daher dem in der Kammer herrschenden Überdruck nach und wird radial nach innen verformt. Wird anschließend ein neues Tubenlaminat zur Verbindung mit einer weiteren Tubenschulter wieder in die Erwärmungsvorrichtung eingeführt, so verschließt das Tubenlaminat die Ausströmöffnung wieder, wonach in der Kammer ein geeigneter Überdruck aufgebaut werden kann. Dieser kann sich in wiederholter Abfolge des Verfahrens wieder abbauen durch Anströmung des plastifizierten Endbereichs des nächsten Tubenlaminats, wenn dieses an der Ausströmöffnung vorbeibewegt wird.

Nachfolgend soll eine Ausführungsform der Erfindung anhand von Figurenbeispielen näher erläutert werden. Dabei zeigt
- Fig. 1: eine schematische Schnittdarstellung der wesentlichen Komponenten der erfindungsgemäßen Vorrichtung,
- Fig. 1a: eine vergrößerte Detailansicht des Endabschnitts, und
- Fig. 2: eine perspektivische Ansicht eines erfindungsgemäßen Luftringes.

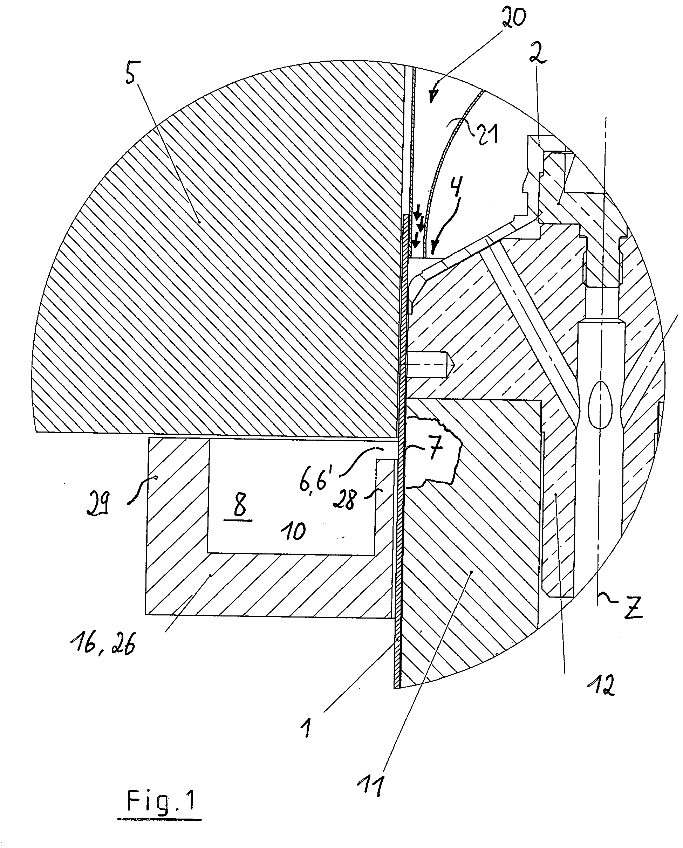

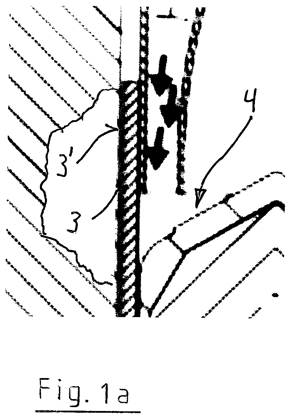

Fig. 1 zeigt einen Fertigungsschritt einer Laminattube, bei der das erfindungsgemäße Verfahren bzw. die erfindungsgemäße Vorrichtung zur Anwendung kommt. Ein auf einem Dorn 11 zylinderförmig aufgebrachtes Tubenlaminat 1 erstreckt sich aufwärts in eine Erwärmungsvorrichtung, die auf der Außenseite des Tubenlaminats 1 einen Stützring 5 aufweist (die Vorrichtung gemäß Fig. 1 ist im Wesentlichen symmetrisch zur Achse Z des Tubenlaminats 1 ausgebildet, weshalb die Darstellung nur einer Hälfte der Vorrichtung ausreicht). Auf einem an dem Dorn 11 anliegenden Spindelkopf 12 ist eine Tubenschulter 2 aufgebracht, die an einem Verbindungsbereich 4 mit einem Endabschnitt 3 des Tubenlaminats 1 verbunden werden soll.

Die vergrößerte Ansicht gemäß Fig. 1 a zeigt das obere Ende des Tubenlaminats 1 als Endabschnitt 3 mit einer nach außen gewandten Außenseite 3'. Tubenlaminat 1 und Tubenschulter 2 sind in die Erwärmungsvorrichtung eingeführt, um den Endabschnitt 3 bzw. den Verbindungsbereich 4 miteinander zu verbinden. Dazu wird Heißluft 20 über einen Strömungskanal 21 in die von Tubenschulter 2 und Endabschnitt 3 gebildete Kehle geleitet. Innerhalb kurzer Zeit (Sekundenbruchteile) wird der Endabschnitt 3 ebenso wie der Verbindungsbereich 4 stark erwärmt bzw. plastifiziert, weshalb insbesondere der Endbereich 3 seine zuvor zylinderförmige Struktur nicht ohne weiteres beibehalten kann.

Um die plastifizierten Bereiche 3 und 4 miteinander zu verbinden, ist es erforderlich, den Dorn 11 mit dem Spindelkopf 12 gemeinsam aus der Erwärmungsvorrichtung herauszuführen (in Fig. 1 nach unten), um anschließend in eine nicht dargestellte Pressform eingeschoben zu werden, in der der plastifizierte Endabschnitt 3 auf den Verbindungsbereich 4 aufgelegt bzw. an ihn angedrückt wird, um eine feste Verbindung zwischen Tubenlaminat 1 und Tubenschulter 2 herzustellen.

Unterhalb des Stützringes 5 sind Mittel 16 in Form eines Luftringes 26 angeordnet. Der Luftring 26 bildet mit der Unterseite des Stützringes 5 eine Kammer 8, die eine nach innen gerichtete Ausströmöffnung 6' in Form eines Ringspaltes 6 aufweist. Über eine in Fig. 1 nicht dargestellte Zufuhr wird Druckluft 10 in der Kammer 8 bereitgehalten. Ein unterhalb des Endabschnitts 3 an diesen angrenzender Tubenabschnitt 7 verschließt den Ringspalt 6 in der in Fig. 1 dargestellten axialen Position der Tubenlaminats 1, so dass die Druckluft 10 nicht über den Ringspalt 6 entweichen kann. Durch den den Tubenabschnitt 7 radial von innen abstützenden Dorn 11 wird der Ringspalt 6 ausreichend abgedichtet.

Bewegt sich der Dorn 11 mit dem Spindelkopf 12 nach erfolgter Erwärmung von Endabschnitt 3 bzw. Verbindungsbereich 4 in Z-Richtung abwärts relativ zum ortsfesten Stützring 5 und dem ebenfalls ortsfesten Luftring 26, so gleitet das Tubenlaminat 1 an dem Ringspalt 6 entlang nach unten, bis der Endabschnitt 3 den Ringspalt 6 erreicht und darüber hinaus. Da der Endabschnitt 3 innenseitig nicht abgestützt wird und aufgrund seiner Erwärmung leicht verformbar ist, kann die Druckluft 10 aus der Kammer 8 durch den Ringspalt 6 nach innen strömen und dabei die Außenseite 3' des Endabschnitts 3 mit einem Strömungsimpuls beaufschlagen. Infolgedessen verformt sich der Endabschnitt 3, dem Strömungsimpuls nachgebend, in Richtung zur Tubenachse Z, wobei er sich teilweise auch an den erwärmten Verbindungsabschnitt 4 anlegen kann. Die Kammer 8, der Ringspalt 6 und der Druck, mit dem die Druckluft 10 in der Kammer 8 bereitgehalten wird, sind dabei so gewählt, dass eine ausreichende Verformung des Endabschnitts 3 nach innen erzielt wird, wenn sich der Dorn 11 mit dem Spindelkopf 12 mit konstanter Geschwindigkeit an dem Ringspalt 6 entlang herabsenkt. Die Dauer der Beaufschlagung des Endabschnitts 3 beim Vorbeigleiten am Ringspalt 6 liegt dabei in der Größenordnung von Sekundenbruchteilen, beispielsweise 0,3 s.

Wenn Dorn 11 und Spindelkopf 12 mit dem daran angeordneten Tubenlaminat 1 vollständig aus der Erwärmungsvorrichtung (in Fig. 1 nach unten) herausgezogen sind, hat der Endabschnitt 3 aufgrund der Druckluftbeaufschlagung am Ringspalt 6 entlang seines gesamten Umfangs eine nach innen gerichtete Verformung erfahren, die das anschließende Einführen in die nicht dargestellte Pressform sicher gewährleistet.

Fig. 2 zeigt eine Ausführungsform eines Luftringes 26 in perspektivischer Ansicht. Zu erkennen ist eine von oben in den Ring eingebrachte umlaufende Ringnut, die in Umfangsrichtung durch vier Verschraubungsvorsprünge leicht eingeengt ist. Die Ringnut bildet eine Kammer 8, in dem der Luftring 26 gemäß Darstellung in Fig. 1 von unten gegen einen Stützring 5 angelegt wird. Ein äußerer Ringabschnitt 29 des Luftrings hat ein etwas größeres axiales Abmaß als ein innerer Ringabschnitt 28, so dass sich aus der Differenz der beiden Maße der in Fig. 1 dargestellte Ringspalt 6 ergibt. Zufuhröffnungen 27, die über den Außenumfang des Luftringes 26 verteilt in die Kammer 8 führen, gestatten die möglichst gleichmäßige Einströmung der Druckluft. Dadurch soll eine möglichst gleichmäßige Ausströmung der Druckluft durch den Ringspalt 6 nach innen erfolgen, um den Endabschnitt 3 ebenso gleichmäßig nach innen verformen zu können.

## Patentansprüche

1. Verfahren zur Herstellung von Laminattuben, bei dem ein Tubenlaminat (1) mit einer um eine Tubenachse (Z) ausgebildeten Tubenschulter (2) verbunden wird, umfassend folgende Verfahrensschritte:
a) Positionieren eines Endabschnitts (3) des Tubenlaminats (1) an der Tubenschulter (2),
b) Erwärmen des Endabschnitts (3),
c) Beaufschlagen des erwärmten Endabschnitts (3) mit einer zur Tubenachse (Z) gerichteten Medienströmung, um den Endabschnitt (3) in Richtung auf einen Verbindungsbereich (4) der Tubenschulter (2) umzuformen, **dadurch gekennzeichnet,**
d) **dass** der Verbindungsbereich (4) der Tubenschulter (2) erwärmt wird.

2. Verfahren nach Anspruch 1, **dadurch gekennzeichnet, dass** die Erwärmung erfolgt, während der Endabschnitt (3) an seiner Außenseite (3') mittels eines Stützringes (5) abgestützt wird.

3. Verfahren nach einem der vorigen Ansprüche, **dadurch gekennzeichnet, dass** der Endabschnitt (3) an einem den Endabschnitt (3) umlaufenden Ringspalt (6) vorbeibewegt wird, aus welchem das den Endabschnitt (3) beaufschlagende Medium (10) strömt.

4. Verfahren nach dem vorhergehenden Anspruch, **dadurch gekennzeichnet, dass** ein an den Endabschnitt (3) angrenzender Tubenabschnitt (7) den Ringspalt (6) vor der Beaufschlagung verschließt.

5. Verfahren nach einem der vorigen Ansprüche, **dadurch gekennzeichnet, dass** eine eine Kammer (8) bildende und das Tubenlaminat (1) umlaufende Ringstruktur (26) vorgesehen wird, wobei das Medium (10) in der Kammer (8) mit Überdruck bereitgestellt wird.

6. Verfahren nach einem der vorigen Ansprüche, umfassend folgende Schritte:
a) Anordnen eines Tubenlaminats (1) auf einem Dorn (11);
b) Anordnen einer Tubenschulter (2) auf einem Spindelkopf (12);
c) Positionieren des Dorns (11) relativ zum Spindelkopf (12) derart, dass ein Endabschnitt (3) des Tubenlaminats (1) in axialer Richtung oberhalb eines Verbindungsbereichs (4) der Tubenschulter (2) angeordnet ist;
d) Erwärmen des Endabschnitts (3) und des Verbindungsbereichs (4) zum Zweck der späteren Verschmelzung mit einem heißen Gas (20);
e) Bewegen des Dorns (11) mit Spindelkopf (12) derart, dass der Endabschnitt (3) an einem das Tubenlaminat (1) umlaufenden Ringspalt (6) vorbeibewegt wird,
f) Beaufschlagung der Außenseite (3') des Endabschnitts (3) mit einem aus dem Ringspalt (6) strömenden Medium, insbesondere Druckluft.

7. Vorrichtung zur Fertigung von Laminattuben nach einem der vorgenannten Verfahren, umfassend
a) Mittel (11) zum Positionieren eines Endabschnitts (3) des Tubenlaminats (1) an der Tubenschulter (2), und
b) Mittel zum Erwärmen des Endabschnitts (3) und eines Verbindungsbereichs (4) der Tubenschulter, wobei Mittel (16) zur Beaufschlagung des Endabschnitts (3) des Tubenlaminats (1) mit einer auf die Außenseite (3') des Endabschnitts (3) gerichteten Strömung vorgesehen sind.

8. Vorrichtung nach dem vorhergehenden Anspruch, **dadurch gekennzeichnet, dass** die Mittel (16) zur Bildung wenigstens einer zum Tubenlaminat (1) gerichteten Öffnung, insbesondere eines Ringspalts (6), ausgebildet sind.

9. Vorrichtung nach einem der vorigen Vorrichtungsansprüche, **dadurch gekennzeichnet, dass** die Mittel (16) als eine das Tubenlaminat (1) umlaufende Ringstruktur (26) in der Funktion eines Luftringes ausgebildet sind, der in sich oder in Zusammenwirkung mit einem weiteren Element eine Kammer (8) bildet, die mit einem Strömungsmedium (10) druckbeaufschlagbar ist.

10. Vorrichtung nach dem vorhergehenden Anspruch, **dadurch gekennzeichnet, dass** die Kammer (8) wenigstens eine Öffnung (6') aufweist, welche durch Bewegung des Tubenlaminats (1) in dessen axialer Richtung (Z) verschließbar ist.

11. Vorrichtung nach einem der vorigen Vorrichtungsansprüche, **dadurch gekennzeichnet, dass** der Endabschnitt (3) des Tubenlaminats (1) nach seiner Erwärmung an einer das Tubenlaminat (1) auf seiner Außenseite (3') umlaufenden und eine auf die Außenseite (3') gerichtete Strömung bereitstellenden Strömungsöffnung (6') entlang bewegbar ist.

## Claims

1. A method for the production of laminate tubes in which a tube laminate (1) is connected with a tube shoulder (2) formed around a tube axis (Z), comprising the following process steps:
a) Positioning an end section (3) of the tube laminate (1) at the tube shoulder (2)
b) Heating the end section (3)
c) Application of a flow of media, directed toward the tube axis (Z), onto the heated end section (3) to deform the end section (3) in the direction of the connection area (4) of the tube shoulder (2), **characterized in that**
d) The connection area (4) of the tube shoulder (2) is heated.

2. Method according to claim 1, **characterized in that** the heating is performed while the end section (3) is supported at its outer side (3') by a support ring (5).

3. Method according to one of the preceding claims, **characterized in that** the end section (3) is moved past a circumferential annular gap (6), from which the flow media (10) is applied to the end section (3).

4. Method according to the preceding claim, **characterized in that** a tube section (7) adjacent to the end section (3) closes the annular ring (6) before application of the medium.

5. Method according to one of the preceding claims, **characterized in that** a ring structure (26), which forms a chamber (8) and encircles the tube laminate (1), is present and the medium (10) in the chamber (8) is provided with positive pressure.

6. Method according to one of the preceding claims, comprising the following steps:
a) Placing a tube laminate (1) on a mandrel (11);
b) Positioning of a tube shoulder (2) on a spindle head (12);
c) Positioning of the mandrel (11) relative to the spindle head (12) so that an end section (3) of the tube laminate (1) is positioned in the axial direction above a connection area (4) of the tube shoulder (2);
d) Heating of the end section (3) and the connection area (4) to facilitate subsequent fusion with a hot gas (20);
e) Movement of the mandrel (11) with spindle head (12) so that the end section (3) is moved passed an annular gap (6) that encircles the tube laminate (1);
f) Application of a medium, in particular compressed air, to the outer side (3') of the end section (3). The medium flows out of the annular ring (6).

7. Device for production of laminate tubes according to one of the preceding methods, comprising:
a) Means (11) for positioning an end section (3) of the tube laminate (1) at the tube shoulder (2)
b) Means for heating the end section (3) and a connection area (4) of the tube shoulder
Where means (16) for applying a medium to the end section (3) of the tube laminate (1) that is directed toward the outside (3') of the end section (3).

8. Device according to the preceding claim, **characterized in that** the means (16) for forming at least one opening directed toward the tube laminate (1), in particular an annular gap (6), is present.

9. Device according to one of the preceding device claims, **characterized in that** the means (16) take the form of a ring structure (26) encircling the tube laminate (1) and the function of an air ring, which itself or together with another element forms a chamber (8) that can be used to store a pressurized medium (10).

10. Device according to the preceding claim, **characterized in that** the chamber (8) has at least one opening (6') that can be closed by movement of the tube laminate (1) along its axial direction (Z).

11. Device according to one of the preceding device claims, **characterized in that** the end section (3) of the tube laminate (1), after being heated, can be moved past a flow opening (6') positioned circumferentially on the outer side (3') of the tube laminate (1). The flow opening (6') can direct a medium toward this outer side (3').

## Revendications

1. Procédé de fabrication de tubes laminés permettant l'assemblage d'un laminé de tube (1) et d'un collet de tube (2) formé autour d'un axe de tube (Z) qui comprend les étapes suivantes :
a) positionnement d'une section terminale (3) du laminé de tube (1) sur le collet de tube (2),
b) chauffage de la section terminale (3),
c) application d'un flux de fluide orienté vers l'axe de tube (Z) sur la section terminale (3) chauffée pour déformer la section terminale (3) en direction d'une zone de liaison (4) du collet de tube (2), **caractérisé par le fait**
d) **que** la zone de liaison (4) du collet de tube (2) est chauffée.

2. Procédé selon la revendication 1, **caractérisé par le fait que** le chauffage s'effectue pendant que la section terminale (3) est soutenue sur son côté extérieur (3') au moyen d'un anneau de support (5).

3. Procédé selon l'une des revendications précédentes, **caractérisé par le fait que** la section terminale (3) se déplace le long de la fente annulaire (6) qui entoure la section terminale (3) et par laquelle le fluide (10) à appliquer sur la section terminale (3) sort.

4. Procédé selon la revendication précédente, **caractérisé par le fait qu'**une section de tube (7) adjacente à la section terminale (3) ferme la fente annulaire (6) avant l'application du flux de fluide.

5. Procédé selon l'une des revendications précédentes, **caractérisé par le fait qu'**une structure annulaire (26) autour du laminé de tube (1) et formant une chambre (8) est prévue, le fluide (10) étant disponible dans la chambre (8) avec une surpression.

6. Procédé selon l'une des revendications précédentes, comprenant les étapes suivantes :
a) Placement d'un laminé de tube (1) sur un mandrin (11) ;
b) Placement d'un collet de tube (2) sur une tête de broche (12) ;
c) Positionnement du mandrin (11) par rapport à la tête de broche (12) de manière à ce qu'une section terminale (3) du laminé de tube (1) soit placée dans le sens axial au-dessus d'une zone de liaison (4) du collet de tube (2) ;
d) Chauffage de la section terminale (3) et de la zone de liaison (4) à des fins de fusion ultérieure avec un gaz chaud (20) ;
e) Déplacement du mandrin (11) avec la tête de broche (12) de manière à ce que la section terminale (3) passe devant la fente annulaire (6) entourant le laminé de tube (1) ;
f) Application sur le côté extérieur (3') de la section terminale (3) d'un flux de fluide, notamment de l'air comprimé, sortant de la fente annulaire (6).

7. Dispositif de fabrication de tubes laminés selon l'un des procédés mentionnés précédemment comprenant les éléments suivants:
a) dispositif (11) pour le positionnement d'une section terminale (3) du laminé de tube (1) sur le collet de tube (2) et
b) dispositif pour chauffer la section terminale (3) et une zone de liaison (4) du collet de tube, un dispositif (16) étant prévu pour l'application d'un flux de fluide sur la section terminale (3) du laminé de tube (1) orienté sur le côté extérieur (3') de la section terminale (3).

8. Dispositif selon la revendication précédente, **caractérisé par le fait que** les dispositifs (16) sont conçus pour la formation d'au minimum une ouverture orientée vers le laminé de tube (1), notamment une fente annulaire (6).

9. Dispositif selon l'une des revendications de dispositif précédentes, **caractérisé par le fait que** les dispositifs (16) sont conçus en tant que structure annulaire (26) autour du laminé de tube (1) dans la fonction d'un anneau distributeur d'air qui forme seul ou en interaction avec un autre élément une chambre (8) dans laquelle un flux de fluide (10) peut être appliqué.

10. Dispositif selon la revendication précédente, **caractérisé par le fait que** la chambre (8) présente au minimum une ouverture (6') qui se ferme par le déplacement du laminé de tube (1) dans son sens axial (Z).

11. Dispositif selon l'une des revendications de dispositif précédentes, **caractérisé par le fait que** la section terminale (3) du laminé de tube (1), après son chauffage, peut se déplacer le long d'une ouverture (6') qui entoure le laminé de tube (1) sur son côté extérieur (3') et fournit un flux de fluide orienté vers le côté extérieur (3').
